# EUROPEAN PATENT APPLICATION

(11) **EP 4 407 255 A1**
(43) Date of publication of application: **31.07.2024**
(21) Application number: 22872447.2
(22) Date of filing: 22.04.2022
(51) Int. Cl.: F25B 1/00, F25B 49/02

(54) **REFRIGERATION CYCLE DEVICE**

(30) Priority: 24.09.2021 JP 2021155271
(71) Applicant: Toshiba Carrier Corporation, Kawasaki-Shi, Kanagawa 212-8585 (JP)
(72) Inventor: BABA, Atsushi, Fuji-shi, Shizuoka 416-8521 (JP); KIGUCHI, Yukio, Fuji-shi, Shizuoka 416-8521 (JP); MARUKO, Kohei, Fuji-shi, Shizuoka 416-8521 (JP); ARITA, Shohei, Fuji-shi, Shizuoka 416-8521 (JP)
(74) Representative: Gramm, Lins & Partner Patent- und Rechtsanwälte PartGmbB
(86) International application number: PCT/JP2022/018559
(87) International publication number: WO 2023/047688

(57) **Abstract**

This refrigeration cycle device comprises a refrigerant circuit, a compressor, a condenser, an evaporator, a branch path, an expansion valve, an adjustment valve, a first temperature detection unit, a first pressure detection unit, a second temperature detection unit, a second pressure detection unit, and a control unit. The control unit determines excess or deficiency of an encapsulated quantity of refrigerant encapsulated in the refrigerant circuit on the basis of relationships among the temperature of refrigerant discharged from the compressor detected by the first temperature detection unit, the pressure of refrigerant discharged from the compressor detected by the first pressure detection unit, the temperature of refrigerant taken into the compressor detected by the second temperature detection unit, the pressure of refrigerant taken into the compressor detected by the second pressure detection unit, and the aperture of the adjustment valve.

## Description

### Technical Field

Embodiments described herein relate generally to a refrigeration cycle apparatus.

### Background Art

The refrigeration cycle apparatus is composed of a refrigerant circuit comprising a compressor, a condenser, an expansion valve, and an evaporator as main elements. A predetermined refrigerant is enclosed in the refrigerant circuit. For example, when a target space is cooled or heated by the refrigeration cycle apparatus, the refrigerant circulates through the refrigerant circuit and exchanges heat with outside air or inside air. At this time, if the refrigeration cycle apparatus is not operated with a proper refrigerant amount, an air conditioning capacity may not be fully exhibited, decreasing energy efficiency, reliability, and the like. Therefore, in order to improve the energy efficiency, the reliability, and the like of the refrigeration cycle apparatus, the refrigeration cycle apparatus needs to be operated with the proper refrigerant amount.

One of methods of determining suitability of an amount of enclosure of the refrigerant (refrigerant amount) for the refrigerant circuit is, for example, arranging each of a sound wave transmitting element and a sound wave receiving element in a liquid pipe of the refrigerant circuit to monitor a flow state of the refrigerant and performing the determination of suitability of the refrigerant amount based on a result of the monitoring. However, adding members such as sound wave elements for the monitoring is likely to cause an increase in costs and the like.

### Citation List

### Patent Literature

Patent Literature 1: JP 3531440 B

### Summary of Invention

### Technical Problem

The present invention has been conceived in consideration of the above and the object of the present invention is to provide a refrigeration cycle apparatus capable of minimizing an increase in costs caused due to addition of members and performing determination of suitability of an amount of an enclosed refrigerant (refrigerant amount) for a refrigerant circuit.

### Solution to Problem

A refrigeration cycle apparatus according to one embodiment includes a refrigerant circuit, a compressor, a condenser, an evaporator, a branch channel, an expansion valve, an adjustment valve, a first temperature detection unit, a first pressure detection unit, a second temperature detection unit, a second pressure detection unit, and a control unit. The refrigerant circuit includes a main flow channel through which a refrigerant circulates. The compressor sucks the refrigerant from the main flow channel, compresses the refrigerant, and discharges the refrigerant to the main flow channel. The condenser condenses the refrigerant. The evaporator evaporates the refrigerant. The branch channel includes in the refrigerant circuit, divides a part of the refrigerant flowing from the condenser to the evaporator from the main flow channel in a downstream side of the condenser, and injects the divided refrigerant to the compressor. The expansion valve decompresses at least a part of the refrigerant flowing from the condenser to the evaporator in a downstream side of the branch channel. The adjustment valve adjusts a flow rate of the refrigerant flowing through the branch channel. The first temperature detection unit detects a discharge temperature of the refrigerant discharged from the compressor in an upstream side of the condenser in the main flow channel. The first pressure detection unit detects a discharge pressure of the refrigerant discharged from the compressor in the upstream side of the condenser in the main flow channel. The second temperature detection unit detects a suction temperature of the refrigerant sucked to the compressor in a downstream side of the evaporator in the main flow channel. The second pressure detection unit detects a suction pressure of the refrigerant sucked to the compressor in the downstream side of the evaporator in the main flow channel. The control unit performs determination of excess or deficiency of an amount of enclosure of the refrigerant enclosed in the refrigerant circuit, based on relationships between the discharge temperature detected by the first temperature detection unit, the discharge pressure detected by the first pressure detection unit, the suction temperature detected by the second temperature detection unit, the suction pressure detected by the second pressure detection unit, and an opening degree of the adjustment valve.

### Brief Description of Drawings

FIG. 1 is a diagram schematically showing a configuration including a refrigeration cycle of a refrigeration cycle apparatus according to an embodiment.
FIG. 2 is a flowchart showing a control in a refrigerant amount suitability determination process in the refrigeration cycle apparatus according to the embodiment.
FIG. 3 is a P-h chart (pressure-enthalpy chart) in the refrigeration cycle apparatus according to the embodiment.

### Mode for Carrying Out the Invention

Embodiments of the present invention will be described below with reference to the accompanying drawings.

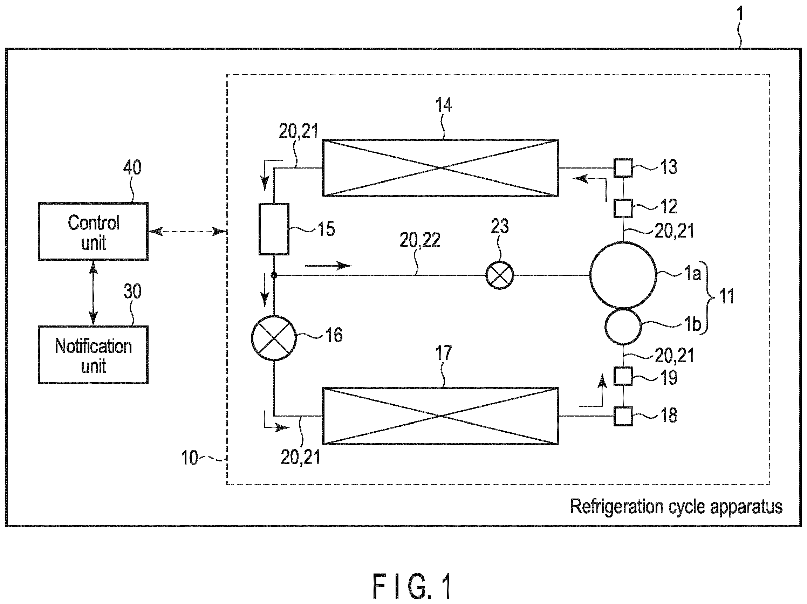

FIG. 1 is a circuit diagram schematically showing a refrigeration cycle of a refrigeration cycle apparatus 1 according to the present embodiment. The refrigeration cycle apparatus 1 is operable in each of a cooling mode, a heating mode, and both modes and applicable as, for example, an air conditioner, a water-cooled heat source device, an air-cooled heat pump chilling unit, a condensing unit, and the like.

As shown in FIG. 1, the refrigeration cycle apparatus 1 comprises a compressor 11, a first temperature detection unit 12, a first pressure detection unit 13, a condenser 14, a refrigerant reservoir device 15, an expansion valve 16, an evaporator 17, a second pressure detection unit 18, a second temperature detection unit 19, and the like as main elements. Each of these constituent elements is connected to each other via a refrigerant circuit 20 through which the refrigerant circulates, and constitutes a refrigeration cycle unit 10. The refrigerant circuit 20 includes a main flow channel 21 through which the refrigerant primarily circulates and a branch channel 22 branched from the main flow channel 21.

The compressor 11 comprises, for example, a compressor body 1a and an accumulator 1b. The compressor body 1a comprises a sealed container, a rotary compression mechanism, an electric mechanism, and the like as main elements, compresses a gas-phase refrigerant supplied from the accumulator 1b and discharges a high-temperature high-pressure gas-phase refrigerant to the main flow channel 21. The accumulator 1b performs a gas-liquid separation of the refrigerant supplied via the main flow channel 21 and supplies a gas-phase refrigerant to the compressor body 1a.

The first temperature detection unit 12 detects a discharge temperature of the refrigerant discharged from the compressor 11 (hereinafter referred to as a discharged refrigerant temperature) in an upstream side of the condenser 14 in the main flow channel 21. The first temperature detection unit 12 is arranged, for example, in the vicinity of a discharge port (not shown) of the refrigerant in the compressor body 1a and detects the temperature of the gas-phase refrigerant as the discharged refrigerant temperature. The first temperature detection unit 12 is, for example, a temperature sensor (thermistor) or the like in which a temperature-sensitive element is arranged in a pipe of the main flow channel 21 and detects the discharged refrigerant temperature. Operations of the first temperature detection unit 12 are controlled by a control unit 40 to be described later and the first temperature detection unit gives a value of the detected discharged refrigerant temperature to the control unit 40 via a wired or wireless means.

The first pressure detection unit 13 detects a discharge pressure of the refrigerant discharged from the compressor 11 (hereinafter referred to as a discharged refrigerant pressure) in the upstream side of the condenser 14 in the main flow channel 21. The first pressure detection unit 13 is arranged, for example, in the vicinity of the discharge port (not shown) of the refrigerant in the compressor body 1a and detects a pressure of the gas-phase refrigerant as the discharged refrigerant pressure. In the example shown in FIG. 1, the first pressure detection unit 13 is arranged in a downstream side of the first temperature detection unit 12. However, the first pressure detection unit 13 may be arranged in an upstream side of the first pressure detection unit 12. The first pressure detection unit 13 is, for example, a pressure sensor or the like in which a pressure-sensitive element is arranged in the pipe of the main flow channel 21 to detect the discharged refrigerant pressure. Operations of the first pressure detection unit 13 are controlled by the control unit 40 to be described later and the first pressure detection unit gives a value of the detected discharged refrigerant pressure to the control unit 40 via a wired or wireless means.

The condenser 14 is arranged on a downstream side of the compressor body 1a in the main flow channel 21, condenses the high-temperature high-pressure gas-phase refrigerant which has been discharged from the compressor body 1a by a heat exchange with air and the like, and changes this refrigerant to a high-pressure liquid-phase refrigerant.

The refrigerant reservoir device 15 stores a surplus refrigerant which exceeds a proper amount of enclosure for the refrigerant circuit 20 (main flow channel 21 and branch channel 22) (hereinafter referred to as a surplus refrigerant). The refrigerant reservoir device 15 is, for example, a receiver, a liquid receiver, or the like. In the example shown in FIG. 1, the refrigerant reservoir device 15 is arranged in a downstream side of the condenser 14 in the main flow channel 21 and stores a high-pressure liquid-phase surplus refrigerant which has been condensed in the condenser 14. A position at which the refrigerant reservoir device 15 is arranged is not limited to the example shown in FIG. 1.

The expansion valve 16 decompresses the high-pressure liquid-phase refrigerant which has been condensed in the condenser 14 and changes this refrigerant to a low-pressure gas-liquid two-phase refrigerant. In the example shown in FIG. 1, the expansion valve 16 is arranged in a downstream side of the refrigerant reservoir device 15 in the main flow channel 21 and the branch channel 22, decompresses the high-pressure liquid-phase refrigerant which has been condensed in the condenser 14 and flowed out of the refrigerant reservoir device15, and changes this refrigerant to the low-pressure gas-liquid two-phase refrigerant. At this time, the expansion valve 16 passes a part or all of the high-pressure liquid-phase refrigerant which has been condensed in the condenser 14 and flowed out of the refrigerant reservoir device 15 in accordance with the opening degree of the adjustment valve 23. In other words, the expansion valve 16 decompresses at least a part of the refrigerant flowing from the condenser 14 to the evaporator 17 in a downstream side of the branch channel 22. Operations of the expansion valve 16 are controlled by the control unit 40 to be described later and the expansion valve gives a value of the opening degree to the control unit 40 via a wired or wireless means.

The evaporator 17 is arranged in a downstream side of the expansion valve 16 in the main flow channel 21, evaporates the gas-liquid two-phase refrigerant which has passed through the expansion valve 16 by the heat exchange with air and the like, and changes this refrigerant to a low-temperature low-pressure gas-phase refrigerant.

The second pressure detection unit 18 detects the suction pressure of the refrigerant sucked to the compressor 11 (hereinafter referred to as a sucked refrigerant pressure) in a downstream side of the evaporator 17 in the main flow channel 21. The second pressure detection unit 18 is arranged, for example, in the vicinity of a suction inlet (not shown) of the refrigerant in the accumulator 1b and detects the pressure of the gas-liquid two-phase refrigerant as the sucked refrigerant pressure. The second pressure detection unit 18 is, for example, a pressure sensor or the like in which the pressure-sensitive element is arranged in the pipe of the main flow channel 21 to detect the sucked refrigerant pressure. Operations of the second pressure detection unit 18 are controlled by the control unit 40 to be described later and the second pressure detection unit gives a value of the detected discharged refrigerant pressure to the control unit 40 via a wired or wireless means.

The second temperature detection unit 19 detects the suction temperature of the refrigerant sucked to the compressor 11 (hereinafter referred to as a sucked refrigerant temperature) in the downstream side of the evaporator 17 in the main flow channel 21. The second temperature detection unit 19 is, for example, arranged in the vicinity of the suction inlet (not shown) of the refrigerant in the accumulator 1b and detects the temperature of the gas-liquid two-phase refrigerant as the sucked refrigerant temperature. In the example shown in FIG. 1, the second temperature detection unit 19 is arranged in a downstream side of the second pressure detection unit 18. However, the second temperature detection unit 19 may be arranged in an upstream side of the second pressure detection unit 18. The second temperature detection unit 19 is, for example, a temperature sensor (thermistor) or the like in which the temperature-sensitive element is arranged in the pipe of the main flow channel 21 to detect the sucked refrigerant temperature. Operations of the second temperature detection unit 19 are controlled by the control unit 40 to be described later and the second temperature detection unit gives a value of the detected sucked refrigerant temperature to the control unit 40 via a wired or wireless means.

As shown in FIG. 1, the main flow channel 21 is branched between the condenser 14 and the expansion valve 16, more specifically, between the refrigerant reservoir device 15 and the expansion valve 16 by the branch channel 22, and then bypassed to the compressor body 1a of the compressor 11 through the branch channel 22. The branch channel 22 is a bypass flow channel of the main flow channel 21. The branch channel 22 divides a part of the refrigerant flowing from the condenser 14 to the evaporator 17 from the main flow channel 21. In the example shown in FIG. 1, the branch channel 22 divides a part of the high-pressure liquid-phase refrigerant which has been condensed in the condenser 14 and flowed out of the refrigerant reservoir device 15, in a downstream side of the refrigerant reservoir device 15 and an upstream side of the expansion valve 16.

The adjustment valve 23 is arranged in the branch channel 22. The adjustment valve 23 decompresses the high-pressure liquid-phase refrigerant flowing through the branch channel 22 and changes this refrigerant to the low-pressure gas-liquid two-phase refrigerant. In addition, the adjustment valve 23 adjusts the flow rate of the refrigerant flowing through the branch channel 22 in accordance with the opening degree of the adjustment valve. Operations of the adjustment valve 23 are controlled by the control unit 40 to be described later and the adjustment valve gives a value of the opening degree to the control unit 40 via a wired or wireless means. The adjustment valve 23 is adjusted to a proper opening degree (hereinafter referred to as a proper opening degree) based on, for example, the discharged refrigerant temperature.

In the present embodiment, as one example, the proper opening degree is defined as a value of the opening degree of the adjustment valve 23 which is preset under a predetermined condition. The predetermined condition (hereinafter referred to as "a precondition") is that a value of each of the discharged refrigerant temperature, the discharged refrigerant pressure, the sucked refrigerant temperature, and the sucked refrigerant pressure is a proper value and the refrigeration cycle apparatus 1 is operated with the amount of the enclosed refrigerant for the refrigerant circuit 20 being the proper amount (optimum amount to be described later). The flow rate of the refrigerant in the branch channel 22 (hereinafter referred to as an injection flow rate) is adjusted to a proper amount by adjusting the opening degree of the adjustment valve 23 to the proper opening degree. In other words, the proper opening degree is predefined such that the injection flow rate becomes the proper amount under the predetermined condition. A value of the proper opening degree is tabulated by, for example, linking to a value of the optimum amount of the refrigerant to be described later, held in a storage device of the control unit 40, and appropriately read into a memory as a parameter when the refrigeration cycle apparatus 1 is operated. As a result, the opening degree of the adjustment valve 23 is adjusted to the proper opening degree and the injection flow rate is thereby adjusted to the proper amount.

The branch channel 22 injects the low-pressure gas-liquid two-phase refrigerant which has passed through the adjustment valve 23 into the compressor body 1a. In other words, the branch channel 22 is what is called an injection flow channel. The compressor body 1a is cooled by injecting the gas-liquid two-phase refrigerant to the compressor body 1a and the temperature of the refrigerant discharged from the compressor body 1a (in short, the discharged refrigerant temperature) decreases.

In addition to these constituent elements, the refrigeration cycle apparatus 1 comprises a notification unit 30 and the control unit 40.

Operations of the notification unit 30 are controlled by the control unit 40 and the notification unit 30 notifies that the amount of the enclosed refrigerant in the refrigeration cycle apparatus 1 (hereinafter referred to as a refrigerant amount) is not the proper amount. The refrigerant amount is an amount of the refrigerant enclosed for the refrigerant circuit 20, more specifically, a current amount of the refrigerant enclosed for the pipes consisting the refrigerant circuit 20 (main flow channel 21 and branch channel 22). The proper amount of the refrigerant is a proper refrigerant amount to be enclosed for the refrigerant circuit 20 and is preset as the amount of enclosure which is necessary to operate the refrigeration cycle apparatus 1 to exert a desired air conditioning performance, for example, under conditions such as assumed lengths of the pipes of the main flow channel 21 and the branch channel 22.

The assumed lengths of the pipes of the main flow channel 21 and the branch channel 22 are varied depending on conditions such as an environment in which the refrigeration cycle apparatus 1 is installed. Therefore, in accordance with the conditions, a plurality of values can be set as the proper amount of the refrigerant, for example, at the time of shipment from a factory. In this case, an optimum value is selected from a plurality of preset proper amounts in accordance with a length of the pipe after installation of the refrigeration cycle apparatus 1 is completed, in other words, a length of the pipe which is actually constructed and the like. The selection may be performed artificially or performed automatically by the control unit 40. The selected proper amount (hereinafter referred to as the optimum amount) is stored, for example, in the storage device of the control unit 40 to be described later and the like, and is appropriately read to the memory as a parameter.

For example, when the refrigerant amount is less than the optimum amount, the notification unit 30 performs a predetermined notification that the refrigerant amount is insufficient for the optimum amount. In this case, the refrigerant may leak from the pipes of the main flow channel 21 and the branch channel 22. Therefore, the notification unit 30 notifies an abnormal state in which the refrigeration cycle apparatus 1 is not operated properly and a desired air conditioning cannot be achieved. As a result, users, workers, and the like (hereinafter referred to as users and the like) are thoroughly notified of and alerted to the situation that a temporary suspension of the refrigeration apparatus 1 and the like is required, for example, for inspection work.

In addition, when the refrigerant amount exceeds the optimum amount, the notification unit 30 may perform the predetermined notification that the refrigerant amount is excessive for the optimum amount. In this case, since the surplus refrigerant can be stored in the refrigerant reservoir device 15, a proper operation of the refrigeration cycle apparatus 1 is not immediately hindered. However, it is possible to alert the users and the like by reporting that the refrigerant amount is excessive for the optimum amount. In addition, when the refrigerant amount is the optimum amount, the refrigerant amount is in a normal state with no excess or deficiency and the notification unit 30 may notify the refrigeration cycle apparatus 1 can continue to be operated properly.

As the notification unit 30, an indicator light, a monitor, a panel, a speaker, or a combination of these and the like can be applied. For example, when the refrigerant amount is insufficient for the optimum amount, the notification unit 30 thoroughly notifies and alerts users, workers, and the like (hereinafter referred to as users and the like) to a leakage of the refrigerant by turning on (flashing) an indicator lump of red light, sounding a warning tone, playing or displaying a warning message, emitting a laser, and the like. On the other hand, when the refrigerant amount is excessive for the optimum amount, the notification unit 30 may perform only minimum notifications such as turning on the indicator lump of yellow light or blue light, and displaying a confirmation message. When the refrigerant amount is more than or equal to the optimum amount, the notification unit 30 need not notify at all.

A position of the notification unit 30 can be anywhere as long as the unit can suitably and thoroughly notify and alert the users and the like. For example, the notification unit 30 may be installed, for example, in a central control room of the refrigeration cycle apparatus 1, a remote controller for operation, and the like.

The control unit 40 controls the operations of the refrigeration cycle apparatus 1. In the present embodiment, the control unit 40 controls the operations of each of the compressor 11, the first temperature detection unit 12, the first pressure detection unit 13, the refrigerant reservoir device 15, the expansion valve 16, the second pressure detection unit 18, the second temperature detection unit 19, the adjustment valve 23, and the notification unit 30 in the refrigeration cycle unit 10. The control unit 40 controls, for example, start and stop of operations, the number of rotations, a frequency, and the like of the compressor 11 and adjusts the opening degree of each of the expansion valve 16 and the adjustment valve 23 in these controls. In addition, in controlling the operations of the refrigeration cycle apparatus 1, the control unit 40 performs determination of an excess or deficiency of the amount of the enclosed refrigerant, i.e., determination of suitability of the refrigerant amount in the refrigerant circuit 20, based on relationships among the discharged refrigerant temperature, the discharged refrigerant pressure, the sucked refrigerant temperature, the sucked refrigerant pressure, and the opening degree of the adjustment valve 23, as described later.

The control unit 40 includes a CPU, the memory, the storage device (nonvolatile memory), an input/output circuit, a timer, and the like and executes predetermined arithmetic processing. For example, the control unit 40 reads various data by the input/output circuit, executes the arithmetic processing by the CPU using a program read from the storage device to the memory, and controls the operations of each of the compressor 11, the first temperature detection unit 12, the first pressure detection unit 13, the refrigerant reservoir device 15, the expansion valve 16, the second pressure detection unit 18, the second temperature detection unit 19, the adjustment valve 23, and the notification unit 30, based on a result of the processing. At this time, the control unit 40 transmits/receives a control signal or a data signal to/from these constituent elements via a wired or wireless means. In other words, the control unit 40 is electrically connected to each of the constituent elements that are targets of the above controls via a wired or wireless means.

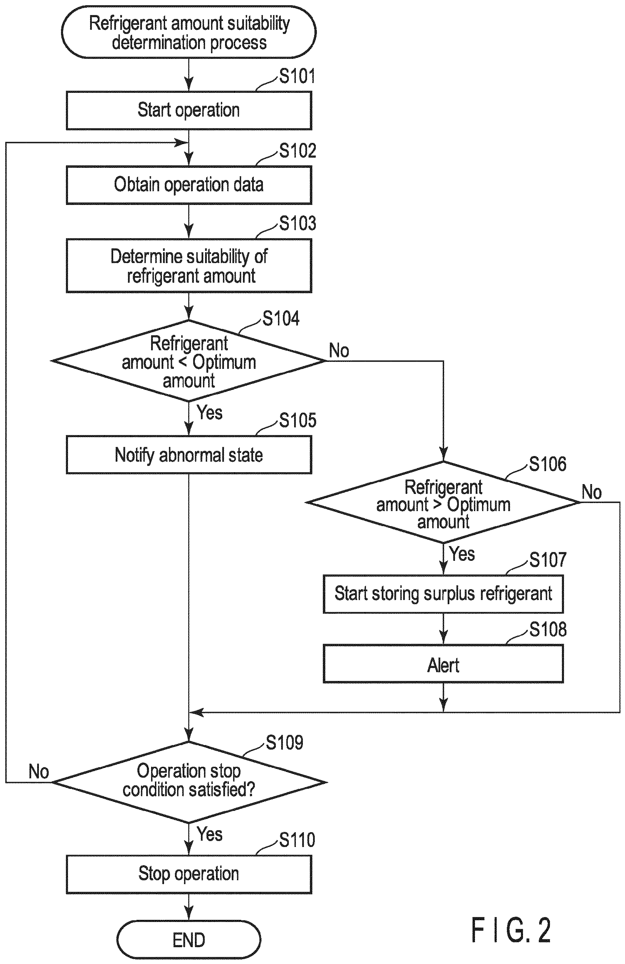

An operation control of the refrigeration cycle apparatus 1 performed by the control unit 40, more specifically, a control for performing the determination of excess or deficiency of the refrigerant amount in the refrigerant circuit 20 executed in the operation control of the refrigeration cycle apparatus 1 (hereinafter referred to as a refrigerant amount suitability determination process), in the refrigeration cycle apparatus 1 comprising the above configuration, will be described according to a control flow of the control unit 40. FIG. 2 shows the control flow of the control unit 40 in the refrigerant amount suitability determination process.

The refrigeration cycle apparatus 1 starts the operation in the refrigerant amount suitability determination process (S101). More specifically, the control unit 40 activates the compressor 11, opens the expansion valve 16, and makes the refrigerant circulate through the main flow channel 21. At this time, the control unit 40 assumes that the above precondition is satisfied and then adjusts the flow rate of the refrigerant in the branch channel 22 (injection flow rate) to the proper amount by adjusting the adjustment valve 23 to the proper opening degree. In other words, at a start of the operation, it is assumed that the refrigeration cycle apparatus 1 is operated in a state in which the adjustment valve 23 is adjusted to the proper opening degree such that the injection flow rate becomes the proper amount. The control unit 40 can execute the refrigerant amount suitability determination process, which is triggered by the operation of the refrigeration cycle apparatus 1 in this state.

In this manner, the control unit 40 obtains each value (operation data) indicating an operation state of the refrigeration cycle apparatus 1 in a state in which the refrigeration cycle apparatus 1 is operated (S102). The operation data are the discharged refrigerant temperature, the discharged refrigerant pressure, the sucked refrigerant temperature, the sucked refrigerant pressure, and the opening degree of the adjustment valve 23. Therefore, the control unit 40 obtains these operation data from each of the first temperature detection unit 12, the first pressure detection unit 13, the second temperature detection unit 19, the second pressure detection unit 18, and the adjustment valve 23.

Next, the control unit 40 determines the suitability of the refrigerant amount in the refrigerant circuit 20, based on the obtained operation data (S103). In other words, the control unit 40 performs the determination of suitability of the refrigerant amount, based on the relationships among the discharged refrigerant temperature, the discharged refrigerant pressure, the sucked refrigerant temperature, the sucked refrigerant pressure, and the opening degree of the adjustment valve 23. For example, when the discharged refrigerant temperature, the discharged refrigerant pressure, the sucked refrigerant temperature, and the sucked refrigerant pressure are all predetermined values (proper values under the precondition), the control unit 40 determines the suitability of the refrigerant amount in accordance with a relationship between the opening degree of the adjustment valve 23 and the proper opening degree. In the present embodiment, the refrigeration cycle apparatus 1 holds in advance a value of each of the discharged refrigerant temperature, the discharged refrigerant pressure, the sucked refrigerant temperature, and the sucked refrigerant pressure, and the value of the proper opening degree of the adjustment valve 23 in a case where the refrigeration cycle apparatus is operated in a state where the refrigerant of each of the multiple proper amounts is enclosed, for example, at the time of shipment from a factory. These values are tabulated, for example, by linking each of the values to the multiple proper amounts of the refrigerant and held in the storage device of the control unit 40. These values may be tabulated as not values in this manner, but as numerical ranges and held in the storage device of the control unit 40.

In addition, even after being held in the storage device of the control unit 40, the value of the proper opening degree of the adjustment valve 23 can be changed in accordance with situations after an actual operation of the refrigeration cycle apparatus 1 starts, for example, fluctuations in the refrigerant amount (current amount of the enclosed refrigerant). As described above, the proper amount of the refrigerant may be changed from a preset initial value in accordance with conditions such as an environment in which the refrigeration cycle apparatus 1 is installed, for example, the lengths of the pipes of the main flow channel 21 and the branch channel 22 which are actually constructed, and the like. In other words, the control unit 40 holds the proper amount of the refrigerant such that the proper amount can be changed from the initial value.

Therefore, the optimum amount of the refrigerant (value selected from the multiple proper amounts) is set by changing the initial value of the proper amount to a value calculated at the time of installation of the refrigeration cycle apparatus 1 and is held in the storage device of the control unit 40 in some cases. An accuracy in the determination of suitability of the refrigerant amount can be increased by assuming such a case and allowing the value of the proper opening degree of the adjustment valve 23 to be changed. In other words, when the proper amount of the refrigerant, in short, the optimum amount is changed from the initial value, the control unit 40 changes and corrects the value of the proper opening degree of the adjustment valve 23 such that the corrected value can be held. For example, a proper response can be made to a case where an amount of additional enclosure for the proper amount of the refrigerant is calculated based on a length of connecting pipes in a multi-purpose air conditioners for building and the refrigerant is additionally enclosed at an installation site, a case where a proper refrigerant is enclosed for the refrigerant circuit after installation of a refrigerator or the like, or the other cases.

In the determination of suitability of the refrigerant amount, the control unit 40 compares the obtained value of the opening degree of the adjustment valve 23, in other words, a current value of the opening degree of the adjustment valve 23, with the value of the proper opening degree. The value of the proper opening degree is read, for example, from the storage device of the control unit 40 to the memory. For example, when the value of the opening degree of the adjustment valve 23 exceeds the value of the proper opening degree, the control unit 40 determines that the refrigerant amount is not proper, more specifically, that the refrigerant amount is less than the optimum amount (the refrigerant amount is insufficient for the optimum amount, in short, the proper amount). On the other hand, when the value of the opening degree of the adjustment valve 23 is less than the value of the proper opening degree, the control unit 40 determines that the refrigerant amount is not proper, more specifically, that the refrigerant amount exceeds the optimum amount (the refrigerant amount is excessive for the optimum amount, in short, the proper amount). Then, when the refrigerant amount is the optimum amount, in short, the proper amount, the control unit 40 determines that the refrigerant amount is not excessive or insufficient but proper.

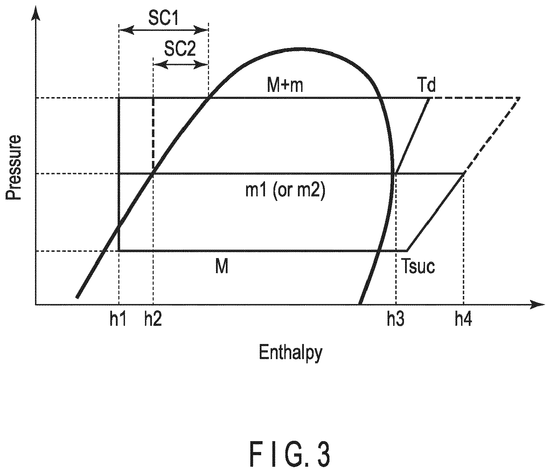

The determination is possible for the following reasons. FIG. 3 shows a P-h diagram (pressure-enthalpy diagram) in the refrigeration cycle apparatus 1 according to the present embodiment. In FIG. 3, M is the refrigerant amount flowing through the evaporator 17. In addition, m is the injection flow rate, subscript 1 indicates the injection flow rate (m1) in a case where the refrigerant amount is the optimum amount, and subscript 2 indicates the injection flow rate (m2) in a case where the refrigerant amount is insufficient for the optimum amount, respectively. Similarly, in FIG. 3, SC1 indicates a supercooling degree at an outlet of the condenser 14 in the case where the refrigerant amount is the optimum amount. SC2 indicates the supercooling degree at the outlet of the condenser 14 in the case where the refrigerant amount is insufficient for the optimum amount. h1, h2, h3, and h4 indicate the enthalpy at respective state points. Tsuc indicates the sucked refrigerant temperature, and Td indicates the discharged refrigerant temperature.

When the refrigerant amount is the optimum amount, in other words, when the supercooling degree at the outlet of the condenser 14 is SC1, the injection flow rate (m1) is calculated by a relational expression "m1 = M (h4 - h3) / (h3 - h1)". On the other hand, when the refrigerant amount is insufficient for the optimum amount, in other words, when the supercooling degree at the outlet of the condenser 14 is SC2, the injection flow rate (m2) is calculated by a relational expression "m2 = M (h4 - h3) / (h3 - h2)". As shown in FIG. 3, since SC2 is smaller than SC1, "(h3 - h1) > (h3 - h2)" is satisfied. Therefore, when the refrigerant amount is insufficient for the optimum amount, the injection flow rate (m2) is larger than the injection flow rate (m1) in the case where the refrigerant amount is the optimum amount. As a result, when the refrigerant amount is insufficient for the optimum amount, the opening degree of the adjustment valve 23 in the injection flow channel 22 is larger than the opening degree of the adjustment valve 23 in the case where the refrigerant amount is the optimum amount (proper opening degree).

Therefore, when the value of the opening degree of the adjustment valve 23 is not the proper opening degree, it can be determined that the refrigerant amount is not the optimum amount. For example, when the value of the opening degree of the adjustment valve 23 exceeds the value of the proper opening degree, it can be determined that the refrigerant amount is less than the optimum amount (the refrigerant amount is insufficient for the optimum amount). In addition, when the value of the opening degree of the adjustment valve 23 is less than the value of the proper opening degree, it can be determined that the refrigerant amount exceeds the optimum amount (the refrigerant amount is excessive for the optimum amount). Then, when the opening degree of the adjustment valve 23 is the proper opening degree, it can be determined that the refrigerant amount is the optimum amount, in other words, the refrigerant amount is not excessive or insufficient but proper.

When it is determined that the refrigerant amount is not the optimum amount as a result of the determination in S103 (Yes in S104 or S106), the control unit 40 operates the notification unit 30 to perform a desired notification that the refrigerant amount is not the optimum amount as follows.

When it is determined that the refrigerant amount is less than the optimum amount, in other words, the refrigerant amount is insufficient for the optimum amount (Yes in S104), the control unit 40 makes the notification unit 30 notify that the refrigeration cycle apparatus 1 is not operated properly and is in the abnormal state in which the desired air conditioning cannot be achieved (S105). For example, the control unit 40 operates the notification unit 30 to turn on (flash) the indicator lamp of red light, sound a warning tone, play or display a warning message, emit a laser, and the like. As a result, it is possible to thoroughly notify and alert users and the like to the leakage of the refrigerant.

In addition, when it is determined that the refrigerant amount exceeds the optimum amount, in other words, the refrigerant amount is excessive for the optimum amount (No in S104 and Yes in S106), the control unit 40 makes the refrigerant storage unit 15 store the surplus refrigerant (S107). In other words, the control unit 40 operates the refrigerant reservoir device 15 to start storing the surplus refrigerant. As a result, the surplus refrigerant is stored in the refrigerant reservoir device 15 and the refrigerant amount is adjusted to the optimum amount. Therefore, the refrigeration cycle apparatus 1 can be operated continuously and properly to perform the desired air conditioning.

At the same time, the control unit 40 makes the notification unit 30 perform a notification in order to alert the users and the like (S108). For example, the control unit 40 operates the notification unit 30 to turn on the yellow indicator light, display a confirmation message, and the like. The notification can be minimum in this manner, but in this case, the control unit 40 may not make the notification unit 30 operate or perform no notification. Since the surplus refrigerant is stored in the refrigerant reservoir device 15 (S107) even if no notification is performed, a situation in which a proper operation of the refrigerant cycle apparatus 1 is immediately hindered can be avoided.

After making the notification unit 30 perform the desired notification (S105 or S108), the control unit 40 determines an operation stop condition of the refrigeration cycle apparatus 1 (S109). In addition, when it is determined in S103 that the refrigerant amount is the optimum amount (No in S104 and No in S106), the control unit 40 determines the operation stop condition of the refrigeration cycle apparatus 1 (S109). In this case, for example, the control unit 40 may make the notification unit 30 notify that the refrigerant amount is the optimum amount, before determining the operation stop condition. The operation stop condition is a determination condition of whether to stop the operation of the refrigeration cycle apparatus 1 and is determined, for example, in accordance with whether the control unit 40 has received a signal indicating a stop of the operation of the refrigeration cycle apparatus 1 and the like. The signal indicating the stop of the operation is transmitted by, for example, selecting the stop of the operation in the central control room, the remote controller for the operation, and the like of the refrigeration cycle apparatus 1.

When the operation stop condition is not satisfied, the control unit 40 obtains the operation data of the refrigeration cycle apparatus 1 (S102) and determines again the suitability of the refrigerant amount in the refrigerant circuit 20, based on the obtained operation data (S103). Then, following processes (S104 to S108) are selectively repeated in accordance with a result of the determination. On the other hand, when the operation stop condition is satisfied, the control unit 40 stops the operation of the refrigeration cycle apparatus 1 (S110).

In other words, while the refrigeration cycle apparatus 1 is operated, a series of the refrigerant amount suitability determination processes is repeated. Then, when the operation of the refrigeration cycle apparatus 1 is stopped, the series of the refrigerant amount suitability determination processes is also terminated.

Thus, according to the present embodiment, the determination of suitability of the amount of the enclosed refrigerant (amount of the refrigerant) for the refrigerant circuit 20 can be performed using the first temperature detection unit 12, the first pressure detection unit 13, the second temperature detection unit 19, the second pressure detection unit 18, and the adjustment valve 23. Elements that the refrigeration cycle apparatus 1 conventionally comprises can be used as these constituent elements. Therefore, there is no need to add dedicated members for performing the refrigerant amount suitability determination process, for example, a sound wave transmitting element, a sound wave receiving element, and the like. In other words, an increase in costs caused due to addition of members can be minimized, and the determination of suitability of the amount of the enclosed refrigerant (amount of the refrigerant) for the refrigerant circuit 20 can be performed. As a result, the excess or deficiency of the refrigerant amount in the refrigerant circuit 20 can be suppressed. Therefore, the refrigeration cycle apparatus 1 can be operated properly to exert the desired air conditioning performance, and the energy efficiency and the reliability of the refrigeration cycle apparatus 1 can be improved.

In addition, it is possible to suitably and thoroughly notify and alert the users and the like about the suitability of the refrigerant amount by performing the desired notification when the refrigerant amount in the refrigerant circuit 20 is excessive or insufficient. For example, when the refrigerant amount is insufficient for the optimum amount, the temporary suspension of the refrigeration cycle apparatus 1 and the like for the inspection work can be performed rapidly. As a result, the refrigeration cycle apparatus 1 can be quickly returned to the proper operation by performing works such as repair or exchange of the main flow channel 21 and the branch channel (injection flow channel) 22 or replenishment of the refrigerant immediately. In addition, even when the refrigerant amount is excessive for the optimum amount or when the refrigerant amount is the optimum amount, it is also possible to prevent in advance the abnormal state in which, for example, the refrigeration cycle apparatus 1 is not operated properly and the desired air conditioning cannot be achieved by performing the desired notification.

Moreover, by setting the value of the proper opening degree of the adjustment valve 23 to be changeable in accordance with an operation status of the installed refrigeration cycle apparatus 1, the excess or deficiency of the refrigerant amount in the refrigerant circuit 20 can be suppressed more properly, and a decrease in the energy efficiency and the reliability of the refrigeration cycle apparatus 1 can be further prevented.

In the embodiment described above, the refrigeration cycle apparatus 1 comprises a first pressure detection unit 13 for detecting the discharged refrigerant pressure and a second pressure detection unit 18 for detecting the sucked refrigerant pressure. However, instead of these pressure detection units 13 and 18, the discharged refrigerant pressure and the sucked refrigerant pressure may be calculated based on a method of converting a condensation temperature or evaporation temperature of the refrigerant into a saturated vapor pressure, a method of converting a relationship between the outside air temperature and a fan speed of the condenser, and a relationship between a fan speed of the evaporator and the outside air temperature, into the saturated vapor pressure, and the like. In this case, the pressure detection units 13 and 18 can be omitted, further suppressing the increase in costs caused due to addition of members.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

1... refrigeration cycle apparatus, 1a... compressor body, 1b. . . accumulator, 10... refrigeration cycle unit, 11... compressor, 12... first temperature detection unit, 13... first pressure detection unit, 14... condenser, 15... refrigerant reservoir device, 16... expansion valve, 17... evaporator, 18... second pressure detection unit, 19... second temperature detection unit, 20... refrigerant circuit, 21... main flow channel, 22... branch channel (injection flow channel), 23... adjustment valve, 30... notification unit, 40... control unit

## Claims

1. A refrigeration cycle apparatus comprising:
a refrigerant circuit including a main flow channel through which a refrigerant circulates;
a compressor sucking the refrigerant from the main flow channel, compressing the refrigerant, and discharging the refrigerant to the main flow channel;
a condenser condensing the refrigerant;
an evaporator evaporating the refrigerant;
a branch channel included in the refrigerant circuit, dividing a part of the refrigerant flowing from the condenser to the evaporator from the main flow channel in a downstream side of the condenser, and injecting the divided refrigerant to the compressor;
an expansion valve decompressing at least a part of the refrigerant flowing from the condenser to the evaporator in a downstream side of the branch channel;
an adjustment valve adjusting a flow rate of the refrigerant flowing through the branch channel;
a first temperature detection unit detecting a discharge temperature of the refrigerant discharged from the compressor in an upstream side of the condenser in the main flow channel;
a first pressure detection unit detecting a discharge pressure of the refrigerant discharged from the compressor in the upstream side of the condenser in the main flow channel;
a second temperature detection unit detecting a suction temperature of the refrigerant sucked to the compressor in a downstream side of the evaporator in the main flow channel;
a second pressure detection unit detecting a suction pressure of the refrigerant sucked to the compressor in the downstream side of the evaporator in the main flow channel; and
a control unit performing determination of excess or deficiency of an amount of enclosure of the refrigerant enclosed in the refrigerant circuit, based on relationships between the discharge temperature detected by the first temperature detection unit, the discharge pressure detected by the first pressure detection unit, the suction temperature detected by the second temperature detection unit, the suction pressure detected by the second pressure detection unit, and an opening degree of the adjustment valve.

2. The refrigeration cycle apparatus of claim 1, wherein
the control unit holds a value of the opening degree of the adjustment valve which is preset under conditions that each of the discharge temperature, the discharge pressure, the suction temperature, and the suction pressure is a proper value and that the amount of the enclosed refrigerant for the refrigerant circuit is a proper amount as a value of a proper opening degree,
when a current value of the opening degree of the adjustment valve in the determination of excess or deficiency of the amount of the enclosed refrigerant exceeds the value of the proper opening degree, the control unit determines that the amount of the enclosed refrigerant is insufficient for the proper amount,
when the current value of the opening degree is less than the value of the proper opening degree, the control unit determines that the amount of the enclosed refrigerant is excessive for the proper amount, and
when the current value of the opening degree is the value of the proper opening degree, the control unit determines that the amount of the enclosed refrigerant is the proper amount.

3. The refrigeration cycle apparatus of claim 2, wherein
the control unit holds the value of the proper opening degree of the adjustment valve such that the value is changeable.

4. The refrigeration cycle apparatus of claim 3, wherein
the control unit holds the proper amount, of the amount of the enclosed refrigerant, such that the proper amount is changeable from a preset initial value and,
when the proper amount is changed from the initial value, the control unit changes and corrects the value of the proper opening degree of the adjustment valve and holds a corrected value.

5. The refrigeration cycle apparatus of any one of claims 2 to 4, further comprising:
a notification unit performing a notification that the amount of the enclosed refrigerant is not the proper amount, wherein
when the amount of the enclosed refrigerant is not determined as the proper amount, the control unit operates the notification unit to perform the notification that the amount of the enclosed refrigerant is not the proper amount.

6. The refrigeration cycle apparatus of claim 5, further comprising:
a refrigerant reservoir device storing a surplus refrigerant exceeding the proper amount when the amount of the enclosed refrigerant is excessive for the proper amount, wherein
when the amount of the enclosed refrigerant is determined insufficient for the proper amount, the control unit makes the notification unit notify a result of the determination and
when the amount of the enclosed refrigerant is determined excessive for the proper amount, the control unit makes the refrigerant reservoir device store the surplus refrigerant.
